(19) Europäisches Patentamt
European Patent Office
Office européen des brevets

(11) Publication number: **0 049 966 A1**

(12) # EUROPEAN PATENT APPLICATION

(21) Application number: 81304438.5

(22) Date of filing: 25.09.81

(51) Int. Cl.³: C 08 F 14/06
C 08 F 4/36

(30) Priority: 13.10.80 AU 6023/80

(43) Date of publication of application: 21.04.82 Bulletin 82/16

(84) Designated Contracting States: AT BE CH DE FR GB IT LI NL SE

(71) Applicant: ICI AUSTRALIA LIMITED
ICI House 1 Nicholson Street P.O.Box 4311
Melbourne Victoria 3001(AU)

(72) Inventor: Coldrey, Peter Wallace
38 Tuxen Street
North Balwyn Victoria 3104(AU)

(72) Inventor: Gianneschi, Leon Paul
13 Pictor Court
Donvale Victoria 3111(AU)

(72) Inventor: Neill, Keith Gordon
10 Birrell Court
Kew Victoria 3101(AU)

(72) Inventor: Rizzardo, Ezzio
26 Alex Avenue
Wheelers Hill Victoria 3170(AU)

(74) Representative: Sheller, Alan et al,
Imperial Chemical Industries PLC Legal Department: Patents Thames House North Millbank
London SW1P 4QG(GB)

(54) **Use of diperesters in the polymerisation of vinyl chloride monomer.**

(57) The invention concerns a process for the polymerization of vinyl chloride monomer (VCM) using as a initiator a compound of formula I

$$R^1OO-\overset{O}{\overset{\|}{C}}-\overset{O}{\overset{\|}{C}}-OOR^2 \qquad 1$$

wherein $R^1$ and $R^2$ are independently chosen from $C_1$ to $C_6$ alkyl. The initiators are highly active and the process provides a method for the efficient polymerization of VCM at lower temperatures and/or for shorter reaction times than can be achieved with the current commercially available catalysts.

EP 0 049 966 A1

This invention relates to a process for the polymerization of vinyl monomers, and in particular to a process for the polymerization of vinyl chloride using a polymerization initiator comprising a diperester of oxalic acid, and to polymers prepared according to the process of the invention.

It is known in the art to polymerize vinyl monomers using free radicals generated from organic peroxides to initiate the reaction. However, not all organic peroxides are effective initiators for the polymerization of all vinyl monomers. For example, in United States Patent 3,341,507, Guillet et al teach that "peroxydicarboxylic acid esters such as di-tert-butyl peroxyoxalate are (also) ineffective in the practice of this invention"; the disclosed invention comprising the polymerization of vinyl monomers at a temperature in the range from 60$^o$ to 250$^o$C and a pressure of 1 atmosphere to 50,000 psi.

Surprisingly, it has now been found that certain di- esters of diperoxyoxalic acid are very effective initiators for the polymerization of vinyl chloride monomer (VCM).

Accordingly the present invention provides a process for the production of a vinyl chloride polymer which process comprises the homo- or copolymerization of vinyl chloride at a temperature in the range of from 25$^o$ to 80$^o$C and a pressure in the range of from 1 to 20 kg/cm$^2$ in the presence of from 0.01 to 2%, by weight of the monomer, of a diester of diperoxyoxalic acid of formula I

$$R^1-O-O-\overset{O}{\overset{\|}{C}}-\overset{O}{\overset{\|}{C}}-O-O-R^2$$

wherein $R^1$ and $R^2$ are independently chosen from $C_1$ to $C_6$ alkyl, cyclohexyl and benzyl and at least one of $R^1$ and $R^2$ is a secondary alkyl group, a tertiary alkyl group or

a benzyl group.

Suitable values for $R^1$ and $R^2$ include straight chain $C_1$ to $C_6$ alkyl, branched chain $C_1$ to $C_6$ alkyl, cyclohexyl and benzyl. Preferred $R^1$ and $R^2$ are $C_1$ to $C_6$ alkyl and especially secondary or tertiary $C_3$ to $C_6$ alkyl. A particularly preferred compound of formula I is di-(tert-butyl) diperoxyoxalate.

The process of the present invention may be applied to the production of vinyl chloride homopolymers or vinyl chloride copolymers containing at least 50 mole percent, and more preferably at least 80 mole percent, of units derived from vinyl chloride monomer. Monomers which may be copolymerized with vinyl chloride monomer include, for example: vinyl derivatives such as vinyl bromide, vinyl acetate, vinylidene chloride, N-vinylcarbazole, methyl vinyl ether, vinyl isobutyl ether and N-vinylpyrrolidone; α-olefins such as ethylene, propylene, butylene and isobutylene; acrylates such as acrylic acid, n-butyl acrylate, ethyl acrylate, methyl acrylate, 2-ethylhexyl acrylate, methacrylic acid, methyl methacrylate, ethyl methacrylate, n-butyl methacrylate and 2-ethylhexyl methacrylate; unsaturated nitriles such as acrylonitrile and methacrylonitrile; unsaturated dicarboxylic acid derivatives such as diallyl maleate, dibutyl maleate, diethyl fumarate, dimethyl itaconate and maleic anhydride; triallyl cyanurate, triallyl isocyanurate and trimethylolpropane, trimethacrylate; and mixtures thereof.

The polymerization process of the invention may be carried out using any of the operating conditions customarily used for the homo- or co- polymerization of vinyl chloride monomer. Conventional processes for the preparation of vinyl chloride polymers include bulk polymerization, gas phase polymerization and polymerization in an aqueous medium by suspension or emulsion

polymerization techniques.

In the process of the present invention, preferably, vinyl chloride monomer is homo- or copolymerized using an aqueous suspension process with the aid of one or more suspending agents. Suitable suspending agent(s) for use in the process of the present invention may be chosen from those conventionally used in the art for the polymerization of vinyl chloride monomer in aqueous suspension. Such suspending agents include, for example, methylcellulose, hydroxymethylcellulose, hydroxyethylcellulose, hydroxypropylmethylcellulose, hydrolysed poly(vinyl acetate), gelatin, methyl vinyl ether - maleic anhydride copolymers, and mixtures thereof. A preferred suspending agent for use in the process of the present invention is partially hydrolysed poly (vinyl acetate) (PVAc).

The degree of hydrolysis of the currently commercially available PVACs which may be used as suspension agents when the vinyl chloride monomer is polymerized in aqueous suspension according to the process of the present invention may vary within a large range. Usually the degree of hydrolysis of the PVAc is in the range of from 20 to 90 mole %. Preferably the degree of hydrolysis is in the range of from 60 to 90 mole %.

The partially hydrolysed PVAc may be used on its own as a suspension agent or in combination with a different type of suspension agent. The total amount of suspension agent used in the polymerization may vary widely and is generally between 0.05 and 2.0% by weight of the monomer.

The polymerization process of the invention is generally carried out at a temperature in the range of from $25^{o}$ to $80^{o}C$ and preferably from $30^{o}$ to $70^{o}C$. The pressure at which the polymerization reaction may be carried out ranges from atmospheric pressure to a pressure of 20 $kg/cm^2$ but the pressure is preferably

below 15 $kg/cm^2$.

One of the significant advantages of the process of the present invention is that the high order of activity of the compounds of formula I enables the polymerization reaction to be carried out at lower temperatures and/or for shorter reaction times than can be achieved using the current commercially available "high activity" initiators. For example, the polymerization of vinyl chloride monomer in aqueous suspension using bis(4-t-butylcyclohexyl) peroxydicarbonate (one of the most active commercially available initiators as initiator under conventional reaction conditions, at a temperature in the range of from 50-70°C takes of the order of 120 to 250 minutes for completion. In contrast when vinyl chloride is polymerized according to the process of the invention using di-(tert-butyl) diperoxyoxalate (a compound of formula I) as initiator, under identical reaction conditions, at a temperature of 50°C the reaction takes of the order of only 50 minutes for completion.

In view of the teaching of Guillet et al in United States Patent 3,341,507, and hereinbefore referred to, it is surprising to find that certain di- esters of diperoxyoxalic acid are very effective initiators for the polymerization of vinyl chloride monomer. Moreover, it should be noted that while it might be expected that organic peroxides of low thermal stability, such as the compounds of formula I, would readily decompose to give free radicals, this case of generation of free radicals is not a measure of the usefulness of the compound as an initiator for the polymerization of vinyl chloride monomer.

For example, the half-lives of the initiators acetylcyclohexane sulfonyl peroxide (ACSP) and bis(4-tert-butylcyclohexyl) peroxydicarbonate (BCHP; one of

the most active commercially available initiators) are of the order of 30 minutes and 160 minutes respectively (measured in benzene at a temperature of 50°C) and therefore it might be expected that ACSP would be a considerably more active (faster) initiator than BCHP for the polymerization of vinyl chloride monomer. However, while ACSP begins to polymerize vinyl chloride monomer at a much faster rate than does BCHP, it appears that the ACSP may be rapidly exhausted as the higher rate of polymerization soon decreases. In the final analysis, under the same reaction conditions, a temperature of 50°C and using the same molar concentration of initiators, ACSP polymerizes vinyl chloride monomer to 75% conversion only of the order of 1.1 times faster than does BCHP.

Therefore, it is completely unexpected to find that in the process of the present invention an initiator such as di(tert-butyl) diperoxyoxalate (a compound of formula I) with an even shorter half-life (of the order of 20 minutes measured in benzene at 50°C) than ACSP polymerizes vinyl chloride monomer to over 80% conversion of the order of at least 2.6 times faster than does BCHP.

The advantages which flow from the process of the present invention enabling the polymerization of vinyl chloride monomer to be carried out at lower temperatures than heretofore possible will be evident to those skilled in the art. For example, significant savings in manufacturing costs may be realised by utilizing lower reaction temperatures and/or shorter reaction times. Moreover, polymers having improved properties may be obtained by carrying out the polymerization reaction at lower temperatures.

Another advantage of the process of the present invention is that the use of initiators of formula I

results in the inclusion of only very low levels of "initiator residues" into the polymer, which may lead to improved polymer properties. For example, when the compounds of formula I decompose to generate the free radicals which initiate the polymerization reaction, the only products formed are the low molecular weight radicals $R^1O.$ and $R^2O.$ and carbon dioxide. In effect, this means that on a weight for weight basis only very small amounts of material which did not originate from the monomer are incorporated into the polymer.

While the process of the present invention is especially advantageous in the low temperature polymerization of vinyl chloride monomer it may also be used to advantage in higher temperature polymerizations using a mixed initiator system. For example, depending on the specific reaction conditions employed, a polymerization reaction according to the process of the present invention which employs a compound of formula I as the only initiator may not go to completion before the initiator is exhausted. If it is desired in the process of the present invention to utilize reaction conditions in which the initiator of formula I may be exhausted before the completion of the polymerization reaction, completion of the reaction can be effected by the use of a mixed initiator system comprising a compound of formula I and one of the less active, slower initiators. Suitable additional initiators may be chosen from those initiators known in the art to be suitable for use in the polymerization of vinyl chloride monomer including, for example, lauroyl peroxide, bis-(4-tert-butylcyclohexyl) peroxydicarbonate, dibenzoyl peroxide, diisopropyl peroxydicarbonate, tert-butyl peroxypivalate, azobisisobutyronitrile, azobis-2,4-dimethylvaleronitrile, sulfonyl peroxides and the like.

The compounds of formula I are highly active initiators for the polymerization of vinyl chloride monomer which decompose when heated. Moreover, some of the compounds may explode when scratched, rubbed or crushed. As a result it is important that the compounds of formula I be treated with care.

Compounds of formula I may be conveniently prepared by the stepwide addition of a suitable hydroperoxides to oxalyl chloride according to the following reaction scheme.

(i)

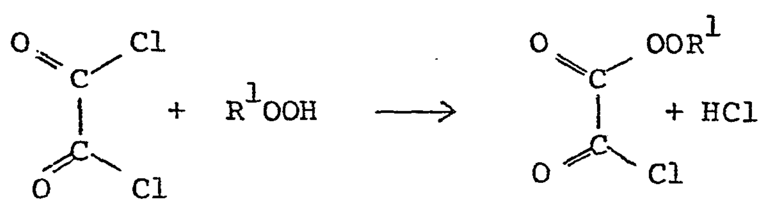

(ii)

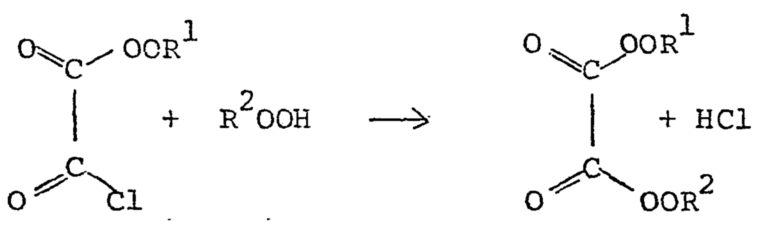

In compounds of formula I wherein $R^1$ and $R^2$ are the same the reaction may be carried out in one step by reacting one mole of oxalyl chloride with two moles of the appropriate alkyl hydroperoxide. The reaction is preferably carried out at a temperature below $0^oC$ in an anhydrous inert solvent such as an aliphatic or aromatic hydrocarbon. A base, for example pyridine, may be added to the reaction mixture to neutralize the hydrogen chloride formed in the reaction.

The compound of formula I used as an initiator in the process of the present invention may be prepared as described above and stored, preferably at a low temperature, until ready for use. Alternatively, if minimum handling and storage of the initiator is desired, the compound of formula I may be prepared in an adjacent reaction vessel and be transferred to the polymerization reaction vessel before the polymerization reaction is begun or the compound of formula I may be prepared in situ in the polymerization vessel.

The invention is now illustrated by the following non-limiting Examples.

Example 1

Preparation of di-(tert-butyl) diperoxyoxalate

A mixture of tert-butyl hydroperoxide (90 parts), pyridine (80 parts) and anhydrous pentane (1 000 parts) was cooled to a temperature of -10°C. A solution of oxalyl chloride (64 parts) and anhydrous pentane (500 parts) was added dropwise to the stirred cold mixture over a period of 40 minutes, the reaction mixture being maintained at a temperature below 0°C throughout the addition. The pyridinium chloride was collected by filtration and washed with cold pentane. The combined filtrates were cooled in a dry ice - acetone bath and the product crystallised. The crystalline di-(tert-butyl) diperoxyoxalate was collected by filtration, moistened with anhydrous pentane and stored at a temperature below -20°C.

Example 2

Water (3 650 ml) and di-(tert-butyl) diperoxyoxalate (6.7 g) were added to a 7.5 l stainless steel, jacketed and agitated autoclave. The autoclave was sealed, agitation was commenced and the autoclave was evacuated. A 1% w/w solution (365 ml) of partially hydrolysed poly(vinyl acetate) and vinyl chloride monomer (2.5 kg) were added to the autoclave. The vessel was heated to the reaction temperature of 50°C and maintained at that temperature until the pressure in the reaction vessel dropped indicating completion of the reaction, a period of 49 minutes. The polymer was discharged from the reaction vessel and the yield and the properties of the polymer were determined.

| | |
|---|---|
| Yield (based on monomer) | 82% |
| Appearance | Normal granular |
| Packing Density | 521 g/l |
| Porosity (%; Hg intrusion) | 24% |
| Hot Plasticizer Absorption (10 minutes at 75°C) | 48% |

Examples 3 to 5

The reaction procedure described in Example 2 was repeated over a range of temperatures using a reaction mixture of water (5 410 ml), 1% w/w solution of partially hydrolysed poly(vinyl acetate) (173 ml), di-(*tert*-butyl) diperoxyoxalate (2.5 g) and vinyl chloride monomer (1 kg). Details of the reaction temperature, reaction time, polymer yield and polymer properties are recorded in Table 1 below.

TABLE 1

| | Example No | | |
|---|---|---|---|
| | 3 | 4 | 5 |
| Reaction Temperature ($^{o}C$) | 45 | 60 | 65 |
| Reaction Time (min) | 79 | 22 | 17 |
| Polymer Yield (% based on monomer) | 84 | 80 | 82 |
| Appearance | normal, granular | normal, granular | normal, granular |
| Packing Density (g/l) | 510 | 608 | 587 |
| Porosity (%; Hg intrusion) | 27 | 9 | 8 |
| Hot Plasticizer Absorption (%; 10 min at $75^{o}C$) | 50 | 32 | 37 |

Example 6

Preparation of di-(*tert*-butyl diperoxyoxalate

A mixture of *tert*-butylhydroperoxide (70 mmole), pyridine (70 mmole) and anhydrous hexane (70 ml) was cooled to a temperature of $-10^{o}C$. A solution of oxalyl chloride (35 mmole) in anhydrous hexane (34 ml) was added dropwise to the stirred, cold mixture over a period of 20 minutes. On completion of the addition the reaction mixture was allowed to slowly warm to a temperature of $15^{o}C$ and the pyridinium chloride was collected by filtration and washed with a little cold hexane. The combined

filtrates were cooled in a dry ice - acetone bath and the product crystallised. The crystalline di(tert-butyl) diperoxyoxalate was collected by filtration, moistened with hexane and stored at a temperature below -10°C.

Examples 7 to 14

Polymerization of vinyl chloride monomer

Water (3.6 l) and di-(tert-butyl) diperoxyoxalate were added to a 7.5 l stainless steel, jacketed and agitated autoclave. The autoclave was sealed, agitation was commenced and the autoclave was evacuated. A 1% w/w solution (384 ml) of partially hydrolysed poly-(vinyl acetate) and vinyl chloride monomer (2.5 kg) were added to the autoclave. The autoclave was then heated to the reaction temperature and maintained at that temperature until the pressure in the autoclave dropped indicating the completion of the reaction. The polymer was discharged from the autoclave and the physical properties of the polymer were determined. The yield of polymer was between 80 and 85% based on the monomer.

The reaction conditions are detailed in Table 2 below and the polymer properties are detailed in Table 3 below.

TABLE 2

Reaction Conditions

| Example No | Reaction Temperature (°C) | Initiator Concentration % w/w based on VCM | (mmoles) | Reaction Time (to pressure drop; min) |
|---|---|---|---|---|
| 7 | 35 | 0.34 | 36 | 204 |
| 8 | 40 | 0.25 | 27 | 97 |
| 9 | 45 | 0.23 | 25 | 69 |
| 10 | 50 | 0.25 | 27 | 59 |
| 11 | 50 | 0.27 | 29 | 47 |
| 12 | 55 | 0.23 | 25 | 45 |
| 13 | 60 | 0.24 | 26 | 28 |
| 14 | 65 | 0.25 | 27 | 17 |

TABLE 3

Polymer Properties

| Property | Example No | | | | | | |
|---|---|---|---|---|---|---|---|
| | 7 | 8 | 9 | 10 | 11 | 12 | 13 |
| P.D. | 465 | 490 | 499 | 517 | 521 | 563 | 615 |
| K | 80.7 | 75.9 | 71.7 | 67.2 | 67.4 | 64.6 | 59.4 |
| C.P.A. | 34.6 | 31.4 | 31.0 | 26.4 | 25.8 | 19.8 | 16.4 |
| H.S. | Good | Fair | Fair | Fair | Fair | Fair | Fair |
| G.S.D. | | | | | | | |
| <81 | 1.8 | 2.9 | 1.4 | 7.5 | 6.3 | 7.2 | 3.1 |
| 102-203 | 74.1 | 76.0 | 60.7 | 75.5 | 72.1 | 72.9 | 85.0 |
| 203-256 | 14.2 | 17.2 | 36.0 | 10.2 | 12.1 | 5.8 | 1.5 |
| >256 | 0.8 | 0.3 | 4.8 | 0 | 0.2 | 1.4 | 0.4 |

Property Code:

P.D. - Packing Density, expressed in g/l.

K - K-value (ISO test), a measure of the intrinsic viscosity of a dilute solution of PVC in cyclohexanone at 25°C determined by the ISO test method.

C.P.A. - Cold Plasticizer Absorption, the percent by weight of the plasticizer di-isooctyl phthalate absorbed by a fixed mass of resin over a period of one hour at a temperature of 25°C.

H.S. - Heat Stability of the polymer, determined by heating a standard mixture of the polymer plasticizer and heat stabilizer at a temperature of 175°C for a period of 20 minutes and expressed as a qualitative assessment of the final colour of the mixture.

G.S.D. - Granule Size Distribution (measured by Coulter Counter); expressed as the percent by weight of the polymer in each of the size ranges indicated in μm.

Example 15

Polymerization of vinyl chloride monomer with in situ preparation of the polymerization initiator

A mixture of tert-butyl hydroperoxide (70 mmole), pyridine (70 mmole) and anhydrous hexane (100 ml) was placed inside a dry 7.5 l stainless steel, jacketed autoclave fitted with a stirring means. The autoclave was sealed and cold water was circulated through the autoclave jacket in order to maintain the autoclave temperature at about 10°C. A solution of oxalyl chloride (70 mmole) in anhydrous hexane (60 ml) was injected into the autoclave and after a period of 10 minutes the autoclave was evacuated and vinyl chloride monomer (2.5 kg) was added. Agitation was commenced and water (3.5 l) and a 1% w/w solution (768 ml) of partially hydrolysed poly-(vinyl acetate) were added. The autoclave was heated to 50°C and maintained at that temperature until the pressure in the autoclave dropped indicating the completion of the reaction (55 minutes). The polymer was discharged from the autoclave and its physical properties were determined. Packing Density - 488 g/l; K-value - 63.4; Cold Plasticizer Absorption - 21.0%; Heat Stability - Fair; Granule Size Distribution - 3.0% <81μm, 89.0% 102-203 μm, 0.9% 203-256 μm, 0% >256 μm.

Comparative Examples A, B, C and D

In order to compare the effectiveness of the polymerization process of the invention to prior art polymerization processes the general reaction procedure described in Examples 7 to 14 was repeated replacing the polymerization initiator di-(tert-butyl) diperoxyoxalate with either bis(4-tert-butylcyclohexyl)peroxydicarbonate

(BCHP; one of the most active commercially available initiators for the polymerization of vinyl chloride monomer) or a mixture of BCHP and lauroyl peroxide (LP).

The reaction conditions are detailed in Table 4 below and the polymer properties are detailed in Table 5 below.

The Comparative Examples show that the prior art processes for the polymerization of vinyl chloride monomer using BCHP or BCHP and LP as initiators give poly(vinyl chloride) having comparable properties with the polymer produced by the process of the present invention. However, it is clear that the time required for the completion of the prior art polymerization process is considerably longer than the time required for the completion of the polymerization process of the present invention. For example, when vinyl chloride monomer (2.5 kg) was polymerized at a temperature of 51$^{o}$C using BCHP (37 mmoles) as initiator the reaction time to pressure drop was 120 min (Comparative Example B, Table 4) whereas when the same amount of vinyl chloride monomer was polymerized under the same conditions using di-(tert-butyl) diperoxyoxalate (29 mmoles) as initiator the reaction time to pressure drop was only 47 minutes (Example 11, Table 2).

TABLE 4

Reaction Conditions

| Example No | Reaction Temperature (°C) | Initiator | Initiator Concentration % w/w based on VCM | (mmoles) | Reaction Time (to pressure drop; min) |
|---|---|---|---|---|---|
| A | 51 | BCHP | 0.16 | 10 | 228 |
| B | 51 | BCHP | 0.60 | 37 | 120 |
| C | 57 | BCHP | 0.08 | 5 | 240 |
| D | 70 | BCHP | 0.04 | 2.5 | 245 |
| | | +LP | 0.04 | 2.5 | |

TABLE 5

Polymer Properties

| Property* | Example No | | | |
|---|---|---|---|---|
| | A | B | C | D |
| P.D. | 565 | 521 | 585 | 623 |
| K | 71.7 | 70.3 | 66.5 | 56.9 |
| C.P.A. | 25.6 | 26.5 | 23.8 | 10.7 |
| H.S. | Good | Poor | Good | Fair |
| G.S.D. | | | | |
| <81 | 0.3 | 2.9 | 5.0 | 0.1 |
| 102-203 | 92.1 | 86.2 | 83.0 | 93.6 |
| 203-256 | 7.4 | 7.7 | 6.8 | 2.5 |
| >256 | 0.3 | 0.8 | 0 | 0.5 |

* For property code see Examples 7 to 14 Table 3.

CLAIMS



1. A process for the production of a vinyl chloride polymer which process comprises the homo- or co-polymerization of vinyl chloride at a temperature in the range of from 25° to 80°C and a pressure in the range of from 1 to 20 kg/cm$^2$ in the presence of from 0.01 to 2%, by weight of the monomer, of a diester of diperoxyoxalic acid of the formula I:

$$R^1-O-O-\overset{O}{\overset{\|}{C}}-\overset{O}{\overset{\|}{C}}-O-O-R^2 \qquad I$$

wherein $R^1$ and $R^2$ are independently chosen from $C_1$ to $C_6$ alkyl, cyclohexyl and benzyl and at least one of $R^1$ and $R^2$ is a secondary alkyl group, a tertiary alkyl group or a benzyl group.

2. A process according to claim 1 wherein in the compound of formula I $R^1$ and $R^2$ are chosen from $C_1$ to $C_6$ alkyl.

3. A process according to claim 1 or claim 2 wherein in the compound of formula I $R^1$ and $R^2$ are chosen from secondary or tertiary $C_3$ to $C_6$ alkyl.

4. A process according to any one of claims 1 to 3 inclusive wherein the compound of formula I is di-(tert-butyl) diperoxyoxalate.

5. A process according to any one of claims 1 to 4 inclusive wherein the vinyl chloride monomer is homo- or co-polymerized in aqueous suspension with the aid of a suspension agent.

6. A process according to claim 5 wherein the suspension agent is partially hydrolysed poly(vinyl acetate).

7. A process according to any one of claims 1 to

6 inclusive wherein the polymerization process is carried out at a temperature in the range of from 30° to 70°C.

8. A process according to any one of claims 1 to 7 inclusive wherein the compound of formula I is either prepared in an adjacent reaction vessel and transferred to the polymerization reaction vessel before the polymerization is begun or prepared in situ in the polymerization vessel before the polymerization reaction is begun.

9. A process according to any one of claims 1 to 8 inclusive wherein the polymerization reaction is carried out in the presence of at least one other polymerization initiator in addition to the compound of formula I.

10. A vinyl chloride polymer produced according to the process of any one of claims 1 to 9 inclusive.

11. A process according to any one of claims 1 to 9 inclusive substantially as herein described with reference to any one of Examples 2, 3 to 5 or 7 to 15.

12. A vinyl chloride polymer produced according to the process of any one of claims 1 to 9 inclusive substantially as herein described with reference to any one of Examples 2, 3 to 5 or 7 to 15.

~~DATED this~~ ~~day of~~ ~~1981~~

~~ICI AUSTRALIA LIMITED~~

0049966

European Patent Office

# EUROPEAN SEARCH REPORT

Application number

EP 81 30 4438

## DOCUMENTS CONSIDERED TO BE RELEVANT

| Category | Citation of document with indication, where appropriate, of relevant passages | Relevant to claim |
|---|---|---|
| Y | CHEMICAL ABSTRACTS, vol. 74, no. 14, April 5, 1971, page 17, abstract 64645z, COLUMBUS, OHIO (US) & JP - A - 70 36 514 (JAPAN CARBIDE INDUSTRIES Co. LTD.), November 20, 1970<br>* the whole abstract *<br>--- | 1-6 |
| Y | CHEMICAL ABSTRACTS, vol. 77, no. 24, December 11, 1972, page 24, abstract 152906c, COLUMBUS, OHIO (US) & JP - A - 72 19 167 (NAKANISHI, KAKUSABURO et al.), June 1, 1972<br>* the whole abstract *<br>--- | 1-6 |
| Y | CHEMICAL ABSTRACTS, vol. 72, no. 10, March 9, 1970, page 6, abstract 44216r, COLUMBUS, OHIO (US) S.G. ERIGOVA et al.: "Diacyl peroxides based on unsubstituted aliphatic diacids as initiators of radical polymerization" & Vysokomol. Soedin. Ser. A 1969, 11(9), 2082-9<br>* the whole abstract *<br>---------- | 1-6 |

The present search report has been drawn up for all claims

| Place of search | Date of completion of the search | Examiner |
|---|---|---|
| The Hague | 15.01.1982 | BOLETTI |

EPO Form 1503.1 06.78

CLASSIFICATION OF THE APPLICATION (Int. Cl. 3)

C 08 F 14/06
C 08 F 4/36

TECHNICAL FIELDS SEARCHED (Int.Cl. 3)

C 08 F 14/06
214/06
114/06
4/36

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document